# EUROPEAN PATENT SPECIFICATION

(11) **EP 4 124 605 B1**
(45) Date of publication and mention of the grant of the patent: **08.01.2025**
(21) Application number: 21187841.8
(22) Date of filing: 27.07.2021
(51) Int. Cl.: C03B 19/06, C03C 1/00, C03C 11/00, C04B 14/24, E04B 1/80, C04B 30/00, C04B 111/00, C04B 111/28, E04B 1/74

(54) **DEVICE FOR PRODUCING A CONTINUOUS FOAMED PLATE FROM A COMPOSITE MATERIAL CONSISTING OF GROUND HOUSEHOLD GLASS WASTE AND A PRODUCT OBTAINED FROM BURNT RICE GRAINS HUSKS**
VORRICHTUNG ZUR HERSTELLUNG EINER KONTINUIERLICHEN SCHAUMSTOFFPLATTE AUS EINEM VERBUNDMATERIAL AUS GEMAHLENEM HAUSHALTSALTGLAS UND EINEM AUS VERBRANNTEN REISSPELZEN GEWONNENEN PRODUKT
DISPOSITIF DE PRODUCTION D'UNE PLAQUE EN MOUSSE EN CONTINU À PARTIR D'UN MATÉRIAU COMPOSITE CONSTITUÉ DE DÉCHETS MÉNAGERS DE VERRE BROYÉS ET PRODUIT OBTENU À PARTIR D'ÉCORCES DE GRAINS DE RIZ BRÛLÉES

(43) Date of publication of application: 01.02.2023
(73) Proprietor: Institute of Metal Science, Equipment and Technologies with Hydro- and Aerodynamics Centre "Acad. A. Balevski" at the BAS, 1574 Sofia (BG)
(72) Inventor: Drenchev, Ludmil Borisov, 1592 Sofia (BG); Chorbov, Iliya Georgiev, 1233 Sofia (BG); Lakov, Luben Ivanov, 1229 Sofia (BG); Toncheva, Krassimira Antonova, 1124 Sofia (BG)
(74) Representative: RACKETTE Patentanwälte PartG mbB

(56) References cited:
- WO-A2-2011/020840
- BG-A- 111 229
- CH-A- 436 596
- JP-A- H10 231 132
- US-A- 3 473 904
- US-A- 3 585 014
- US-A1- 2008 041 104

## Description

### Field of the invention

The present invention relates to a device for producing a continuous foam plate from a composite material consisting of ground household glass waste and a product obtained from burnt rice grains husks, which can be used for obtaining insulation plates of different thicknesses by cutting the plate.

### Background of the invention

Bulgarian patent 65718 B1 describes a vertically arranged device for producing a continuous foam glass ingots. It comprises a charge hopper with a feed mechanism. The hopper is connected to a device with ribs on its inside which performs heating and foaming of the charge which is subsequently shaped into an ingot with a rectangular cross-section and is heat-treated by continuous heated metal bands synchronously moving on its four sides. The ingot is heat-treated up to a tempering-ready state. Finally, the obtained ingot is cut. Electrical energy is used to heat the metal bands and for the foaming of the charge.

Bulgarian patent 66666 B1 describes a horizontally arranged device for producing foamed glass plates, which according to one of the claims has sequentially connected sections. The initial section comprises a hopper with a feeder mechanism connected to a device for heating and foaming of the charge with ribs on its inside. Following this section are heating, cooling and driving sections, with a continuous conveying mesh band between the initial and driving sections. Here, too, electrical energy is used for heating.

In both known devices driving, turning and pulling rollers, as well as cleaning and coating mechanisms are used to drive metal bands and a conveying mesh band.

A disadvantage of the first device is the low performance due to its vertical position and the limitations resulting from this.

A disadvantage of the second device is the impossibility to obtain a high quality continuous foam plate, because the profile of the plate is formed by only three bands and there is no continuous band to form the upper side of the profile. Another disadvantage of the device is that there is no cutting device for obtaining an ingot of a certain length.

JPH10231132 A teaches a device for converting waste glass bottles to glass foam plates in a tunnel kiln. The raw material is placed on a conveyor, formed to a band with rectangular cross-section using a roll flattening the raw material on the conveyor, foamed in a tunnel kiln, cooled and cut. Corresponding features to JPH10231132 A are also disclosed in US3473904 A, US3585014 A, CH436596 A, WO2011020840 A2, and US2008041104 A1.

### Summary of the invention

The object of the invention is to create a device for the production of continuous foam plate with a rectangular profile from a composite material consisting of blanks of ground household glass waste and a product obtained from burnt rice grain husks (which make up from 2 to 20% of the weight of the blanks).

The object of the invention is obtained by a device according to claim 1.

The essence of the disclosed invention in the first place is that the technological process of foaming is performed on continuous, horizontally located, synchronized mesh bands, which allows for the process to be carried out at optimal temperature and with high productivity at the expense of the length of the installation, unlike the known vertical installation. Secondly, at the entrance of the installation there is a device for initial foaming, in which the fed charge falls between metal ribs which heat it to the foaming temperature, after which under the action of gravity it falls on the horizontal conveyor band, while its flow rate is regulated. Once on the horizontal conveyor, the material is reheated to the required temperature with a gas burner. Further, the process continues in the heating, maintenance and cooling sections which are of the same type, where the thermal processes are carried out mainly in a convective manner.

On their way back, the synchronized horizontal conveyor bands also move through the same types of sections and so they are heated at the beginning of the process, thus saving energy.

In addition to gas, electricity can also be used as an energy source.

The waste heat can be utilized in various classical ways, thus reducing the production costs.

At the end of the installation is a cutting device, which is used to form a finished product or blanks for other products.

The invention also relates to a product obtained from burnt rice grains processed by the device for producing a continued foamed plate from a composite material comprising ground household glass waste.

In a preferred embodiment the device is used for producing a continuous foamed plate with rectangular profile from a composite material consisting of ground household glass waste and a product obtained from burnt rice grains husks (which make up from 2 to 20% of the weight of the blanks). The device comprises a foaming equipment, metal, transport and mesh continuous bands forming the cross section of the plate, pulling, cleaning and coating devices, heating and cooling sections performing the tempering of the plate. It also has a cutting mechanism, an initial section (3), heating sections (4), cooling sections (6), pulling sections (8) and (9) and cutting section (13), connected in series. A horizontally located continuous lightweight mesh band (7), which forms the upper side of the rectangular profile (2), is located between the initial section (3) and the pulling section (8). Between the initial section (3) and the pulling section (9) is located a horizontally continuous conveying mesh band (1), which forms the lower side of the rectangular profile (2). On top of the initial section (3) is mounted a hopper (34) for charge (33) connected to auger feeders (32), which are connected to the upper end of a heating device. In the housing of the heating device are located internal spiral gas ducts (30) connected on one end to a gas burner (17). On the other end a connection to a smoke exhaust duct (5) is provided. Inside the heating device are formed longitudinal ribs (29) and at its lower end is mounted a gate valve (35). Near the gate valve, above the rectangular profile (2) and transverse to it, is located a tubular gas burner (36). Furthermore, similarly to the mesh bands (1) and (7), the rectangular profile (2) is bounded laterally by continuous vertical metal bands (28). In the direction of movement of the rectangular profile (2) the metal bands (28) contact with the continuous conveying mesh band (1), which itself contacts with profiles (37). The same applies to the reverse movement of the continuous lightweight mesh band (7). In the direction of movement of the rectangular profile (2) the continuous lightweight mesh band (7) contacts with restrictive profiles (25) in which also contact in their reverse movement the metal bands (28). In the heating sections (4) sideways of one of the vertical walls of the rectangular profile (2) are located gas serpentine coils (18) connected at their lower end to a gas burner (20), and at their upper end to the smoke exhaust duct (5). Sideways of the other vertical wall of the rectangular profile (2) are located centrifugal fans (23). At the bottom of the thus formed chamber there is an opening with a gate valve (27) and on the outer side of the bottom is located a vibrator (26). Laterally at the lower end of the chamber is located a suction pipe with a valve (22) and opposite to it at the upper end of the chamber is located an exhaust pipe with a valve (24) connected to the smoke exhaust duct (5) .

Preferably the device for producing a continuous foam board from a composite material consisting of ground household glass waste and a product obtained from burnt rice grains husks is configured so that in the cooling sections (6) the exhaust pipe with a valve (24) is connected to the atmosphere.

In an embodiment of the invention an electric heater is mounted instead of using a gas serpentine coil (18), a gas burner (20) and a smoke exhaust duct (5) in the heating sections (4) .

### Brief description of the drawings

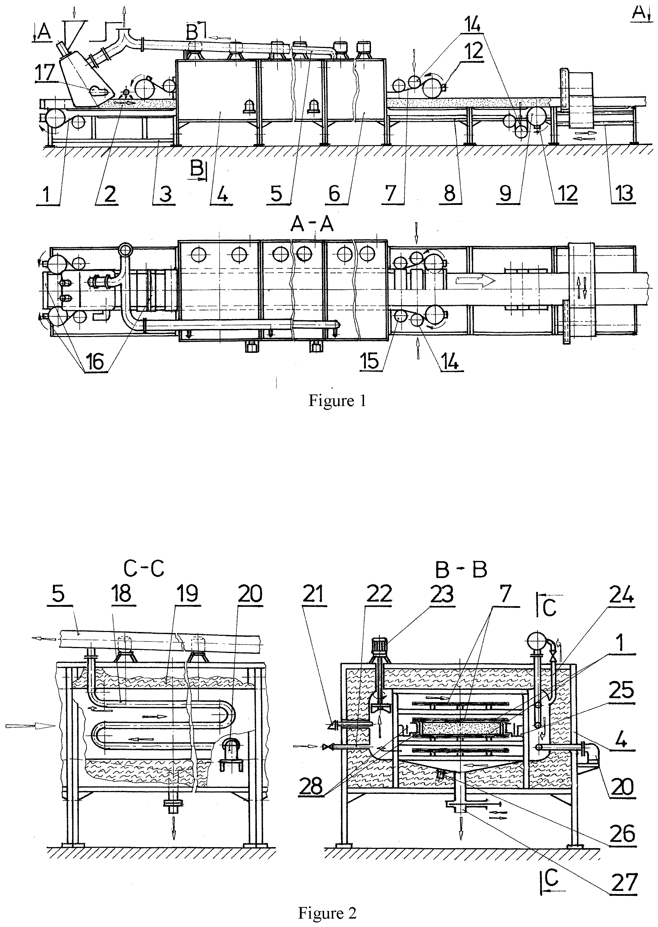

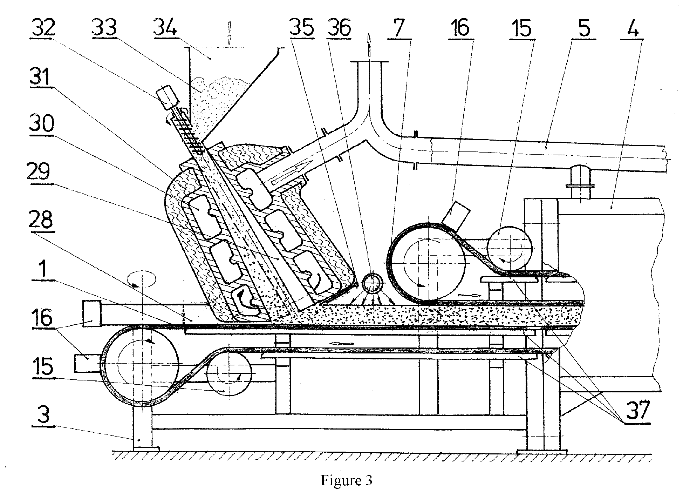

In accordance with the preferred embodiment of the present invention, in Figure 1 are shown the general view of the device and its projection view along direction A-A, in Figure 2 are shown section B-B and section C-C of the heating section and in Figure 3 is shown a cross-sectional view of the initial section along its length.

### Detailed description of the invention

Hereinafter, the invention is described in more detail and specifically with reference to an exemplary embodiment, which however is not intended to limit the scope of the invention.

The device includes an installation for heating, foaming and forming of the charge into a continuous rectangular profile (2) using continuous metal, mesh and conveying bands, cleaning and coating mechanisms, heating, cooling, pooling and cutting sections, characterized that the device consists of an initial section (3), heating sections (4), cooling sections (6), two pulling sections (8) and (9) and a cutting section (13) connected in series. Between the initial section (3) and the pulling section (8) is located horizontally a continuous lightweight mesh band (7), which forms the upper side of the rectangular profile (2).

Between the initial section (3) and the pulling section (9) is located horizontally a continuous conveying mesh band (1), which forms the lower side of the rectangular profile (2). On top of the initial section (3) is mounted a hopper (34) for the charge (33) connected with auger feeders (32), which are connected to the upper end of a heating device comprising a housing in which are formed spiral gas ducts (30) connected at one end to a gas burner (17) and on the other end to a smoke exhaust duct (5). Longitudinal ribs (29) are formed inside the heating device and a gate valve (35) is mounted at its lower end. A tubular gas burner (36) is located near the gate valve (35), above the rectangular profile (2). Similar to the mesh bands (1) and (7), the rectangular profile (2) is bounded laterally by continuous metal bands (28). In the direction of movement of the rectangular profile (2) the continuous conveying mesh band (1) and in the opposite direction the continuous lightweight mesh band (7) both slide on profiles (37). The continuous lightweight mesh band (7) slides on restrictive profiles (25) in the direction of movement of the rectangular profile (2). In the direction of movement of the rectangular profile (2) the continuous metal bands (28) lie on the continuous conveying mesh band (1), and in the opposite direction they slide on the restrictive profiles (25). In the heating sections (4), sideways of one of the vertical walls of the rectangular profile (2) are located gas serpentine coils (18) connected at their lower end to a gas burner (20), and at their upper end to the smoke exhaust duct (5). On the other side of the other vertical wall of the rectangular profile (2) are located centrifugal fans (23), at the bottom of the thus formed chamber there is an opening with a gate valve (27) and on the outer side of the bottom is located a vibrator (26), at the side of the centrifugal fans (23), at the lower end of the chamber is mounted a suction pipe with a valve (22) and on the other side, at the upper end of the chamber is mounted an exhaust pipe with a valve (24) connected to the smoke exhaust duct (5) .

An advantage of the offered device is the possibility to obtain a quality continuous foamed ingot from a composite material consisting of ground household glass waste and a product obtained from burnt rice grains husks. Another advantage results from the fact that the device is positioned horizontally and its performance is high, leading to a quick return on investment. A further advantage is the heating of the continuous conveying mesh band (1), the continuous lightweight mesh band (7) and the continuous metal bands (28), in their reverse movement through the heating sections (4), which intensifies the technological process.

### Operation of the device in accordance with the preferred embodiment of the present invention

The device works as follows. The hopper 34 is loaded with the charge 33 and the gate valve 35 is closed. Then the centrifugal fans 23 and the gas burners 17 and 20 are started in order to heat up the charge up to a temperature of 820°C - 900°C. The auger feeders 32 are started too and they function until the space between the longitudinal ribs 29 is half-filled with charge 33. After the charge 33 has entered between the longitudinal ribs 29 and has foamed as a result of the combustion of the product obtained from burnt rice grains husks (which make up from 2 to 20% of the whole charge), the continuous conveying mesh band 1, the continuous lightweight mesh band 7, the continuous metal bands 28, the coating devices 16, the auger feeders 32 and the tubular gas burner 36 are put into operation and the gate valve 35 is opened. The process has thus been initiated and when the rectangular profile 2 reaches the pulling section 8, the cleaning devices 12 are started. The task of the tubular gas burner 36 is to prevent the cooling of the rectangular profile 2, keeping the temperature in the range of 820°C-900°C until it enters the first heating section 4, and the task of the coating devices 16 is to spread on the respective surfaces a product which reduces the sticking of the rectangular profile 2 onto them. The cleaning devices 12 clean the respective bands from adhering particles of the rectangular profile 2. The heating of the rectangular profile 2 in the heating sections is done, if necessary, gradually at a given rate by convection using the gas burners 20, the gas serpentine coils 18 and the centrifugal fans 23, which create an intensive movement of the heated air, thus avoiding thermal stresses in the rectangular profile 2. To reduce heat losses, the space between the housing of the heating sections and the formed chamber is filled with thermal insulation 19. The device with spiral gas ducts 30 is also insulated by means of thermal insulation 31. The temperature is controlled by regulating the power of the gas burners 20 and its reading is done using thermometers 21. Another way to regulate the temperature is by adjusting the valves 22 and 24, and this applies in particular to the cooling sections 6, as the cold air entering through the suction pipe and the valve 22 cools smoothly the air around the rectangular profile 2 to a temperature of 500°C - 600°C and at the same time is released through the exhaust pipe and the valve 24 in the smoke exhaust duct 5.

Finally, in the cutting section 13, the obtained continuous foamed rectangular profile 2 is cut to pre-determined lengths with a circular saw which moves in two directions rectilinearly-recurrently. This is possible thanks to the synchronized movements of all continuous bands and the movement of the circular saw in the direction of movement of the rectangular profile 2. Guide rollers 15 and pulling rollers 14 are used to compensate the temperature expansions of the continuous bands (1, 7 and 28) and thus to ensure their correct movement. As defined in claim 1, the flow rate of the foamed mass of the charge 33 on the continuous conveying mesh band 1 is adjusted using the gate valve 35, and thus also the thickness of the rectangular profile 2 is adjusted. In such a way can be obtained a thickness smaller than the maximum possible, which is equal to the height of the continuous lightweight mesh band 7. The bottoms of the chambers formed in the heating 4 and cooling 6 sections have inclined sides shaping inverted pyramids in which are collected pieces of the foamed rectangular profile 2 detached from the metal and mesh bands. These pieces are collected by using the vibrator 26 and are periodically removed from sections 4 and 6 through the opening with a gate valve 27. The heat of the gases leaving the smoke exhaust duct 5 is utilized in appropriate ways.

## Claims

1. Device for producing a continuous foamed plate with a rectangular profile (2) from a charge (33) of composite material consisting of ground household glass waste and a product obtained from burnt rice grains husks, the husks making up from 2% to 20% of the weight of the charge comprising:
a foaming equipment,
means for forming the cross section of the plate, heating and cooling sections (4, 6) performing the tempering of the plate,
wherein the device comprises an initial section (3), heating sections (4), cooling sections (6), pulling sections (8, 9) and a cutting section (13), connected in series, where a horizontally located continuous lightweight mesh band (7), which forms the upper side of the rectangular profile (2), is located between the initial section (3) and the pulling section (8) and
where between the initial section (3) and the pulling section (9) is located a horizontally continuous conveying mesh band (1), which forms the lower side of the rectangular profile (2) and wherein the device comprises a cutting mechanism,
**characterized in that** the foaming equipment is mounted on top of the initial section (3) and includes a feed mechanism provided with a hopper (34) and an auger feeder (32) which are connected to the upper end of a heating device for feeding the charge (33) of composite material into the heating device comprising a thermal insulation (31) for a housing with spiral gas ducts (30) connected on one end to a gas burner (17) and on the other end to a smoke exhaust duct (5) and wherein the heating device has longitudinal ribs (29) on its vertically inclined inside and a gate valve (35) at its lower end to adjust the flow rate of the foamed mass of the charge (33) onto the continuous conveying mesh band (1).

2. Device for producing a continuous foamed plate with a rectangular profile (2) according to claim 1, **characterized in that** near the gate valve (35) transversely to the rectangular profile (2) and above it is located a tubular gas burner (36).

## Patentansprüche

1. Vorrichtung zum Herstellen einer durchgehenden Schaumstoffplatte mit einem rechteckigem Profil (2) aus einer Charge (33) eines Verbundmaterials, das aus gemahlenem Haushaltsaltglas und einem aus verbrannten Reisspelzen gewonnenen Produkt besteht, wobei die Spelzen 2 % bis 20 % des Gewichts der Charge ausmachen, umfassend:
eine Verschäumungsanlage,
ein Mittel zum Ausbilden des Querschnitts der Platte, Heiz- und Kühlabschnitte (4, 6), die das Tempern der Platte durchführen,
wobei die Vorrichtung einen Anfangsabschnitt (3), Heizabschnitte (4), Kühlabschnitte (6), Zugabschnitte (8, 9) und einen Schneidabschnitt (13) umfasst, die in Reihe verbunden sind, wobei sich zwischen dem Anfangsabschnitt (3) und dem Zugabschnitt (8) ein horizontal befindliches, durchgehendes Leichtgewebeband (7) befindet, das die Oberseite des rechteckigen Profils (2) formt, und wobei sich zwischen dem Anfangsabschnitt (3) und dem Zugabschnitt (9) ein horizontal durchgehendes Fördergewebeband (1) befindet, das die Unterseite des rechteckigen Profils (2) formt, und wobei die Vorrichtung einen Schneidmechanismus umfasst,
**dadurch gekennzeichnet, dass** die Verschäumungsanlage über dem Anfangsabschnitt (3) montiert ist und einen Zuführmechanismus enthält, der einen Trichter (34) und eine Förderschnecke (32) aufweist, die mit dem oberen Ende einer Heizvorrichtung verbunden sind, um die Charge (33) aus Verbundmaterial in die Heizvorrichtung einzuspeisen, die eine Wärmeisolierung (31) für ein Gehäuse mit spiralförmigen Gaskanälen (30) umfasst,
die an einem Ende mit einem Gasbrenner (17) und an dem anderen Ende mit einem Rauchabzugskanal (5) verbunden sind, und wobei die Heizvorrichtung Längsrippen (29) an ihrer vertikal geneigten Innenseite und ein Absperrventil (35) an ihrem unteren Ende aufweist, um die Fließgeschwindigkeit der verschäumten Masse der Charge (33) auf das endlose Fördergewebeband (1) einzustellen.

2. Vorrichtung zum Herstellen einer durchgehenden Schaumstoffplatte mit einem rechteckigen Profil (2) nach Anspruch 1, **dadurch gekennzeichnet, dass** sich in der Nähe des Absperrventils (35) über und quer zum rechteckigen Profil (2) ein rohrförmiger Gasbrenner (36) befindet.

## Revendications

1. Dispositif de production d'une plaque en mousse en continu à profil rectangulaire (2) à partir d'une charge (33) de matériau composite constitué de déchets ménagers de verre broyés et produit obtenu à partir d'écorces de grains de riz brûlées, les écorces constituant de 2 % à 20 % du poids de la charge comprenant :
un équipement de moussage,
des moyens pour former la section transversale de la plaque,
des sections de chauffe et de refroidissement (4, 6) effectuant la trempe de la plaque,
dans lequel le dispositif comprend une section initiale (3), des sections de chauffe (4), des sections de refroidissement (6), des sections de traction (8, 9) et une section de coupe (13), connectées en série, où une bande à mailles légère en continu (7) située horizontalement, qui forme le côté supérieur du profil rectangulaire (2), se trouve entre la section initiale (3) et la section de traction (8) et où entre la section initiale (3) et la section de traction (9) se trouve une bande de transport à maille en continu horizontalement (1), qui forme le côté inférieur du profil rectangulaire (2) et dans lequel le dispositif comprend un mécanisme de coupe,
**caractérisé en ce que** l'équipement de moussage est monté au-dessus de la section initiale (3) et comprend un mécanisme d'alimentation pourvu d'une trémie (34) et d'un collecteur à vis sans fin (32) qui sont reliés à l'extrémité supérieure d'un dispositif de chauffe pour alimenter la charge (33) de matériau composite dans le dispositif de chauffe comprenant une isolation thermique (31) pour un boîtier avec des conduits de gaz en spirale (30) reliés à une extrémité à un brûleur à gaz (17) et à l'autre extrémité à un conduit d'évacuation de fumée (5) et dans lequel le dispositif de chauffe présente des nervures longitudinales (29) sur sa face intérieure inclinée verticalement et un robinet-vanne (35) à son extrémité inférieure pour ajuster le débit de la masse moussée de la charge (33) sur la bande de transport à mailles en continu (1).

2. Dispositif de production d'une plaque en mousse en continu à profil rectangulaire (2) selon la revendication 1, **caractérisé en ce qu'**à proximité du robinet-vanne (35) transversalement au profil rectangulaire (2) et au-dessus de celui-ci se trouve un brûleur à gaz tubulaire (36).
